(19)

Europäisches
Patentamt
European
Patent Office
Office européen
des brevets

(11) **EP 3 855 839 A1**

(12) **EUROPEAN PATENT APPLICATION**

(43) Date of publication:
   **28.07.2021 Bulletin 2021/30**

(21) Application number: **21153881.4**

(22) Date of filing: **27.01.2021**

(51) Int Cl.:
   **H04W 72/04** *(2009.01)*    **H04W 72/12** *(2009.01)*
   **H04W 24/02** *(2009.01)*

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **27.01.2020 US 202062966126 P
   31.12.2020 US 202017138960**

(71) Applicant: **Sterlite Technologies Limited
   Haryana 122002 (IN)**

(72) Inventors:
   • **PAREKH, Shyam
     California, 94563 (US)**
   • **TANG, Kevin
     California, 94568 (US)**
   • **RAVINDRAN, Ravishankar
     California, 94582 (US)**

(74) Representative: **Hepworth Browne
   15 St. Pauls Street
   Leeds LS1 2JG (GB)**

(54) **METHOD AND APPARATUS FOR DISTRIBUTION AND SYNCHRONIZATION OF RADIO RESOURCE ASSIGNMENTS IN A WIRELESS COMMUNICATION SYSTEM**

(57)    A method and an apparatus for providing dynamic synchronization of radio resources in a radio access network (RAN) (500) in a wireless communication system (1000). The RAN has a type one network scheduler (600) and a type two network scheduler (700). The method includes receiving a first physical resource block (PRB) assignment configuration from the type one network scheduler (600) and the type two network scheduler (700), wherein the first physical resource block (PRB) assignment configuration is received by a first controller (300). Further, the method includes determining a second PRB assignment configuration using the first PRB assignment configuration, wherein the second PRB assignment configuration is determined by the first controller (300). Furthermore, the method includes allocating the second PRB assignment configuration at the synchronization time (s) to the type one network scheduler and the type two network scheduler by the first controller (300).

**Description**

BACKGROUND OF THE INVENTION

Field of the Invention.

The present disclosure relates to a wireless communication system, and more specifically relates to a method and an apparatus for distribution and synchronization of radio resource assignments in the wireless communication system.

Description of Prior Art

The demand of the mobile customers for efficient and reliable connectivity (i.e., improved network) is continuously evolving and hence cellular operators (also referred as "mobile network operators (MNOs) encompassing different radio access technologies (RATs)) desire to meet the mobile customers demand by ensuring uninterrupted services with quality and efficiency. On the other hand, in order to meet this desire, the cellular operators require a favourable balance among customer experience and satisfaction, network performance, and costs.

One way to improve performance and reduce their capital and operating costs is to share resources/bandwidth between the different RATs. That is, a same RAT is unlikely to use all of its resources all the time. Therefore, there is an opportunity for different RATs operating in a given geographical area to pool in some of their respective resources to achieve greater overall efficiency.

The dynamic spectrum sharing (DSS) has been cited as one of the promising mechanisms for managing the radio spectrum for coexisting systems (such as 3G, 4G and 5G). The goal of the DSS is to increase the performance of networks in the shared spectrum, by providing a more efficient way of utilisation, which thereby outperforms fixed spectrum allocation (FSA).

The DSS allows both 4G and 5G RATs to simultaneously operate within the same spectrum. The resources are allocated dynamically between the 4G and 5G technologies based on device distribution and capacity requirements. One of the main requirements in operating the DSS for two different networks (such as the 4G and 5G) is that schedulers of the respective 4G and 5G networks need to operate over the same spectrum in time and space. In case if they don't operate as needed, then they interfere with each other's resource assignment over the time-frequency grid. As detailed below, the DSS operates in either distributed fashion and/or in a centralized approach.

The DSS operating in distributed fashion within individual base stations (BS's) that lacks wider view of the traffic dynamics of multiple cells, and fails to cover or work well with all deployment scenarios (e.g., non-co-located 4G/5G cells, or with UE's moving through multiple cells). That is, in the distributed fashion, the schedulers can estimate the future workload and propose the allocation of the radio resources. In order to avoid large delay during this allocation, one of the Medium access control (MAC) layers can be a master node. But this approach may incur multiple round-trip times (RTT's) and may not be fair. Thus, the actual latency depends on the latency on X2, which in turn depends on CU/DU deployment scenarios, e.g., edge vs center, co-sited vs non co-sited, etc.

In the centralized approach, a logically centralized function can be realized, that is provided with the expected current and future workload. In this, the logically centralized function decides the bandwidth and bit vector allocation. However, the latency in this approach can be comparable to that of the above distributed approach, depending on the actual CU/DU deployment scenarios.

Accordingly, there remains a need for improved methods of dynamic resource sharing that are able to meet the desire of the cellular operators with minimal/no latency and splitting the bandwidth and allocating radio resource between 4G and 5G networks with no interference with each other's resource assignment over the time-frequency grid.

SUMMARY OF THE INVENTION

The principal object of the present invention is to provide a radio resource assignment synchronization between two different network systems (4G and 5G) operating in a wireless communication system.

Another object of the present invention is to efficiently provide scheduling synchronization in a centralized manner from a radio access network (RAN) intelligent controller (RIC) by considering dynamic latency between centralized controller and network schedulers.

Accordingly, herein discloses a method for providing distribution and synchronization of radio resources assignments for different network schedulers in a radio access network (RAN) in a wireless communication system. The RAN includes a type one network scheduler and a type two network scheduler. The method includes receiving a first radio resource (e.g., physical resource block (PRB)) assignment configuration from the type one network scheduler and the type two network scheduler, wherein the first radio resource (PRB) assignment configuration is received by a first controller. The first radio resource (PRB) assignment configuration comprises, a current system frame number (SFN) (i), a timestamp (t) indicating start of the current SFN of the type one network scheduler and the type two network scheduler. The method includes determining a second PRB assignment configuration using the first PRB assignment configuration, wherein the second PRB assignment configuration is determined by the first controller. The second PRB assignment configuration comprises a start system frame number and subframe number pair for the PRB assignment for the type one network scheduler and the type two network scheduler, after a synchronization time (s), the synchronization time is a waiting time period after the first controller transmitting the PRB assignment to the type one network scheduler and the type two network scheduler, and is the time period after which the PRB assignment transmitted by the first controller to the type one network scheduler and the type two network scheduler should take effect. The method includes computing the second PRB assignment configuration after the synchronization time (s) to the type one network scheduler and the type two network scheduler by the first controller. The type one network scheduler and the type two network scheduler are synchronized after the synchronization time for radio resource assignments and the first PRB assignment configuration is used by the first controller until another PRB assignment configuration is received by the first controller.

The method of determining the second PRB assignment configuration using the first PRB assignment configuration further comprises determining a system frame number (SFN) (j) and a subframe number (k), using the SFN (i) and the timestamp (t) in the first PRB assignment configuration, after the synchronization time (s), wherein the SFN (j) = (i + floor((s - t)/ Nsub)) mod Nsys and k = (s-t) mod Nsub, where Nsub is the number of subframes per system frame and Nsys-1 is the maximum system frame number and transmitting the second PRB assignment configuration to the type one network scheduler and the type two network scheduler using the determined system frame number (SFN) and the subframe number.

The method of determining the second PRB assignment configuration using the first PRB assignment configuration further comprises determining a start system frame number and subframe number for the PRB assignment to take effect at type one network scheduler and type two network scheduler, using the SFN (i) and the timestamp (t) in the first PRB assignment configuration, after the synchronization time (s).

The method for providing synchronization of radio resources assignment includes determining the synchronization time based on a sum of, a maximum transport delay (T) between a resource allocation unit and one of the type one network scheduler and the type two network scheduler, a maximum processing time (p) at each of the type one network scheduler and the type two network scheduler and guard time (g).

The method of receiving the first physical resource block (PRB) assignment configuration further comprising receiving the first PRB assignment configuration by the first controller through buffer report messages, from the type one network scheduler and the type two network scheduler.

Accordingly, herein discloses a wireless communication system for providing dynamic synchronization of radio resources assignment. The wireless communication system comprises a radio access network (RAN) and a first controller, wherein the RAN has a type one network scheduler and a type two network scheduler. The first controller is configured to receive a first physical resource block (PRB) assignment configuration from the type one network scheduler and the type two network scheduler. The first physical resource block (PRB) assignment configuration comprises a current system frame number (SFN) (i), a timestamp (t) indicating start of the current SFN at the schedulers and may comprise a buffer size, a request bitmap indicating proposed PRB assignment, a protected bitmap.. The first controller is configured to determine a second PRB assignment configuration using the first PRB assignment configuration. The PRB assignment comprises at least one of:, PRB assigned for type one or type two scheduler, a start system frame number and subframe number for PRBs assigned to take effect, after a synchronization time (s), the synchronization time is a waiting time period after the first controller transmitting the PRB assignment to the type one network scheduler and the type two network scheduler. The first controller is configured to allocate the PRB assignment for time after the synchronization time (s), to the type one network scheduler and the type two network scheduler. The type one network scheduler and the type two network scheduler are synchronized after the synchronization time for radio resource assignments and the first PRB assignment configuration is used by the first controller until another PRB assignment configuration is received by the first controller.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modification.

BRIEF DESCRIPTION OF DRAWING

The invention is illustrated in the accompanying drawings, throughout which like reference letters indicate corresponding parts in the various figures. In order to best describe the manner in which the above-described embodiments are implemented, as well as define other advantages and features of the disclosure, a more particular description is provided below and is illustrated in the appended drawings, understanding that these drawings depict only exemplary embodiments of the invention and are not therefore to be considered to be limiting in scope, the embodiments herein will be better understood from the following description with reference to the drawings, in which:

FIG. 1 illustrates an architecture of a wireless communication system.
FIG. 2 illustrates a radio access network (RAN) intelligent controller (RIC) architecture of FIG. 1.
FIG. 3 illustrates various hardware elements in a Non-RT-RIC (Non-Real-Time-RAN Intelligent Controller).
FIG. 4 illustrates various hardware elements in a Near-RT-RIC (Near-Real-Time-RAN Intelligent Controller).
FIG. 5 illustrates a signal sequence diagram implementing radio resources allocation synchronization in the wireless communication system.
FIG. 6 illustrates a graphical representation of signalling between radio network nodes and the Near-RT-RIC for allocation synchronization.
FIG. 7 is a flow chart illustrating a method for providing dynamic synchronization of radio resources in the wireless communication system.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

REFERENCE NUMERALS IN THE DRAWINGS

For a more complete understanding of the present invention parts, reference is now made to the following descriptions:

1000. Wireless communication system.
100. Service Management and Orchestration (SMO) framework.
200. Non-real-time-radio access network intelligent controller (Non-RT-RIC).
204. DSS configuration unit.
210. Resource configuration unit.
220. Communication unit.
300. Near-real-time-radio access network intelligent controller (Near-RT-RIC).
302. AI/ML unit.
304. DSS allocation unit.
310. Resource allocation unit.
320. Encoder unit.
330. Communication unit.
A1. An interface.
O1. An interface.
E2. An interface.
400. Core networks (EPC/NG core).
500. RAN.
600. The type one network scheduler.
700. The type two network scheduler.
X. Spectrum proportion.
Y. Spectrum proportion.
800-1 and 800-2. User equipments (UEs).
S700. Flow chart.
S702. An operation.
S704. An operation.
S706. An operation.
S708. An operation.

DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Standard Networking Terms and Abbreviation: RAN: A RAN may stand for radio access network. A radio access network (RAN) may be a part of a telecommunications system which may connect individual devices to other parts of a network through radio connections. A RAN may provide a connection of user equipment such as mobile phone or computer with the core network of the telecommunication systems. A RAN may be an essential part of access layer in the telecommunication systems which utilizes base stations (such as e node B , g node B) for establishing radio connections.

Wireless communication system: A wireless communication system may consist of various network components connected via wireless networks. The wireless networks may comprise of any wireless connectivity technology such as radio links, millimeter wave, etc. In this document, the wireless communication system may include one or more controller connected with radio access networks, which are further connected with a plurality of user equipments.

New RAN: A Radio Access Network which can support either NR/E-UTRA or both and have capabilities to interface with Next Generation Core Network (NG-CN). NG-C/U is a Control/User Plane interface towards NG-CN.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e., it interconnects gNB to gNB and LTE eNB to gNB and vice versa.

The A1 interface may be defined as an interface between non-RT RIC and Near-RT RIC to enable policy-driven guidance of Near-RT RIC applications/functions, and support AI/ML workflow. The data packets which are communicated over the A1 interface may be called A1 messages. The E2 interface may be defined as an interface connecting the Near-RT RIC and one or more O-CU-CPs, one or more O-CU-UPs, and one or more O-DUs. The data packets which are communicated over E2 interface may be called E2 messages.

As per the O-RAN Alliance (O-RAN-WG1 OAM Architecture-v02.00), "the near real time RAN Intelligent Controller (near RT RIC) is a logical function that enables near-real-time control and optimization of O-RAN elements and resources via fine-grained data collection and actions over E2 interface. The Non-Real Time Radio Intelligent Controller (non RT RIC) is a logical function that enables non-real-time control and optimization of RAN elements and resources, AI/ML workflow including model training and updates, and policy based guidance of applications/features in near-RT RIC. It is a part of the Service Management & Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization. The xAPP is an independent software plug-in to the Near-RT RIC platform to provide functional extensibility to the RAN by third parties." The near-RT RIC controller can be provided different functionalities by using programmable modules as xAPPs, from different operators and vendors.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

An Open-Radio Access Network, which is an evolved version of prior radio access networks, makes the prior radio access networks more open and smarter than previous generations. The O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation. Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes networkwide efficiency. In combination with O-RAN's open interfaces, AI-optimized closed-loop automation is a new era for network operations.

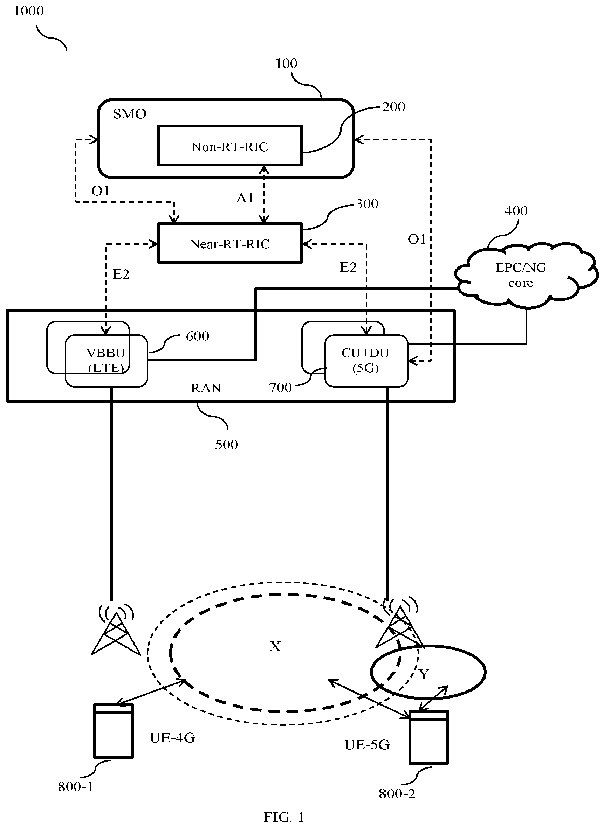

Referring now to the drawings, and more particularly to FIGS. 1 through 7, there are shown preferred embodiments.

FIG. 1 illustrates an architecture of a wireless communication system. The wireless communication system (1000) is an open-radio access network (O-RAN) system. Alternatively, the wireless communication system (1000) may be a fifth generation communication system, an LTE (long term evolution) communication system, a UMTS (Universal Mobile Telecommunications Service) communication system and a GERAN/GSM (GSM EDGE Radio Access Network/ Global System for Mobile Communications) communication system.

In an implementation, the wireless communication system (1000) is the O-RAN architecture system or O-RAN. The O-RAN is an evolved version of prior radio access networks, makes the prior radio access networks more open and smarter than previous generations. The O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation.

Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes network wide efficiency. In combination with O-RAN's open interfaces, AI-optimized closed-loop automation is a new era for network operations.

The wireless communication system (1000) includes a Service Management and Orchestration (SMO) framework (100) configured to provide SMO functions/services such as data collection and provisioning services of a RAN (500). As per O-RAN Alliance (O-RAN-WG1 OAM Architecture-v02.00), the SMO can be defined as "Service Management and Orchestration Framework is responsible for the management and orchestration of the managed elements under its span of control. The framework can for example be a third-party Network Management System (NMS) or orchestration platform. Service Management and Orchestration Framework must provide an integration fabric and data services for the managed functions. The integration fabric enables interoperation and communication between managed functions within the O-RAN domain. Data services provide efficient data collection, storage and movement capabilities for the managed functions. In order to implement multiple OAM architecture options together with RAN service modeling, the modeling of different OAM deployment options and OAM services (integration fabric etc.) must be supported by SMO". The RAN (500), herein, may be an O-RAN node operating in the wireless communication system (1000). The RAN (500) may implement a single radio access technology (RAT) or multiple RATs. The data collection of the SMO framework may include, for example, data related to bandwidth of a plurality of network nodes or network schedulers (a type one network scheduler (600) and a type two network scheduler (700)) and user equipments (UEs) (800-1 and 800-2) connected to the type one network scheduler (600) and the type two network scheduler (700) respectively of the RAN (500). The network scheduler may be defined as a component of RAN which is connected to user equipments at one side and one or more controllers at the other side. The network scheduler may play an important aspect in scheduling the radio resources or resource blocks from the controller. It may enable a base station (such as e node B and g node B) to decide which user equipments (UEs) should be given resources (or resource blocks), how much resource should be given to send or receive data. A network scheduler may govern the scheduling process at per subframe basis i.e. scheduling resources at every 1 mili second. The network scheduler may perform scheduling for a 4G network as a 4G scheduler, and for a 5G network as a 5G scheduler. In the document, 4G scheduler may be considered as a first network scheduler and 5G scheduler may be considered as a second network scheduler.

The UEs (800-1 and 800-2) may be wireless devices e.g., mobile terminals, wireless terminals, terminals, and/or Mobile Stations (MS). The wireless devices may be, for example, portable, hand-held, computer-comprised, or vehicle-mounted mobile devices, enabled to communicate voice and/or data, via the RAN (500), with another entity, such as another terminal or a server. The UEs (800-1 and 800-2) are enabled to communicate wirelessly in a cellular communications network or wireless communication system. The communication may be performed e.g., between the UEs (800-1 and 800-2), between each UE (800-1/800-2) and the server via the RAN (500) and possibly one or more core networks (EPC/NG core) (400) comprised within the wireless communication system (1000).

The wireless communication system (1000) may be divided into cell areas, each cell area being served by the network scheduler (600/700). The network scheduler (600/700) may include, for example, an access node such as a Base Station (BS), e.g., a Radio Base Station (RBS), also referred to as e.g., evolved Node B ("eNB"),"eNodeB","NodeB","B node", gNB, or BTS (Base Transceiver Station), depending on the technology and terminology used. For example, the type one network scheduler (600) may be eNB, herein, that supports 4G/Long term evolution (LTE) RAT and the type two network scheduler (700) may be gNB, herein, that supports 5G/NR RAT.

The RAN (500) (i.e., gNB), herein, may implement the radio access technology (e.g., third generation (3G), fourth generation (4G), fifth generation (5G) and later generations, for example, sixth generation (6G), wireless and broadcast communication standards. The RAN (500) may be an intermediate access point (AP) resided between the UE (800-1/800-2) and core network (CN) (400). The RAN (500) includes the RBS (e.g., eNB and gNB) for implementing the aforementioned radio access technology. Some functions of the eNB and gNB in the RAN (500) may be distributed/implemented through a central unit (CU) ,a distributed unit (DU) (CU/DU) (700) and virtual baseband unit (VBBU) (600). The CU may perform a function of upper layers of the RAN (500), and the DU may perform a function of lower layers of the RAN (500). That is, the CU may be a logical node hosting a radio resource control (RRC) and packet data convergence protocol (PDCP) layers of the RAN (500). The DU may be a logical node hosting radio link control (RLC), media access control (MAC), and physical (PHY) layers of the RAN (500). The VBBU may be a logical node that provides radio functions of the digital baseband domain and remote radio unit (RRU) (not shown) can provide analog radio frequency functions.

Both the eNB and gNB of the RAN (500) may be connected to the evolved packet core/ NextGen (EPC/NG) core network (400). The EPC includes a mobility management entity (MME) which is in charge of control plane functions, and a system architecture evolution (SAE) gateway (S-GW) which is in charge of user plane functions. The MME/S-GW may be positioned at the end of the network and connected to an external network. The MME has the UE (800-1/800-2) access information or UE (800-1/800-2) capability information, and such information may be primarily used in the UE (800-1/800-2) mobility management. The EPC may further include a packet data network (PDN) gateway. Alternatively, described briefly herein is a next generation core (NGC) of the NextGen that may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

The MME provides various functions such as, for example, a non-access stratum (NAS) signaling to the RAN (500), access stratum (AS) security control, inter core network (CN) node signaling for mobility between 3GPP access networks, tracking area list management, P-GW and S-GW selection, or the like. The S-GW host provides functions including, but not limited to, per-user based packet filtering (by e.g., deep packet inspection), lawful interception, transport level packet marking in the DL, UL and DL service level charging, or the like. Similarly, the AMF host may perform primary functions such as NAS signaling termination, NAS signaling security, AS security control, inter CN node signaling for mobility between 3GPP access networks, tracking area list management, or the like. Also, the UPF host may perform primary functions such as anchor point for Intra-/inter-RAT mobility, external PDU session point of interconnect to data network, packet routing and forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

The UE (800-1/800-2) and the RAN (500) may be connected by means of interface (detailed below). The eNB and gNB may be interconnected by means of an "X2" interface (not shown). The RAN (500) is connected to the EPC/NG (400) by means of an S1 interface (not shown).

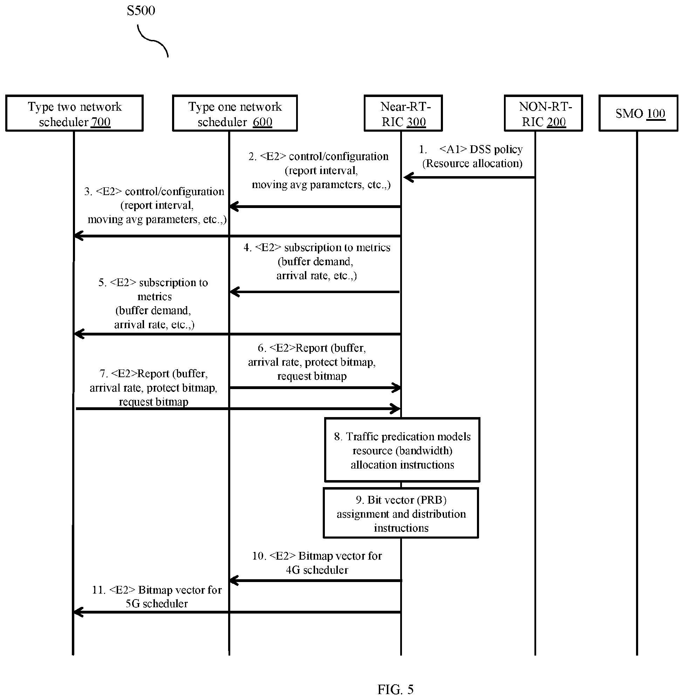

Conventionally, the RAN may perform functions of selection for gateway, routing toward the gateway during a radio resource control (RRC) activation, scheduling and transmitting of paging messages, scheduling and transmitting of broadcast channel (BCH) information, dynamic allocation of resources to the UEs (800-1/800-2) in both UL and DL, configuration and provisioning of eNB/gNB measurements, radio bearer control, radio admission control (RAC). Unlike conventional RAN, the wireless communication system (1000) implements at least some of functionality (example of which is detailed in FIG. 5) by the RAN intelligent controller (RIC) that includes a non-real-time-radio access network intelligent controller (Non-RT-RIC, i.e., a second controller) (200) and a near-real-time-radio access network intelligent controller (Near-RT-RIC, i.e., i.e., a first controller) (300).

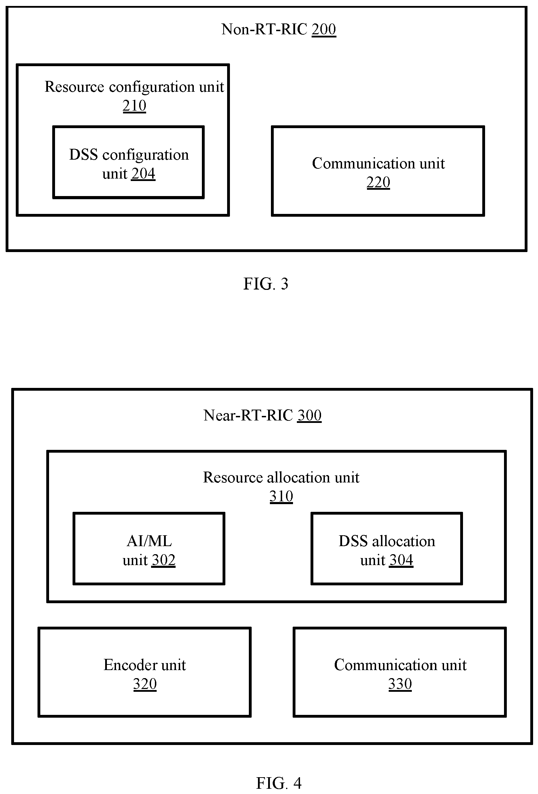

Referring back to the SMO (100) which includes the Non-RT-RIC (i.e., the second controller) (200) that may be configured to support intelligent RAN optimization in non-real-time. Further, the Non-RT-RIC (200) can be configured to leverage the SMO services. The various components and functioning of each component of the Non-RT-RIC (200) are described in conjunction with FIG. 3.

As described earlier, that the focus of the present invention is to provide efficient/enhanced radio resource allocation which is achieved by the intellectualization offered by the Non-RT-RIC (i.e., the second controller) (200) and the Near-RT-RIC (i.e., the first controller) (300). That is, the Non-RT-RIC (200) and the Near-RT-RIC (300) have the characteristic of intellectualization that may utilize artificial intelligence (AI)/ Machine learning (ML) technology to carry out services such as prediction, reasoning and the like.

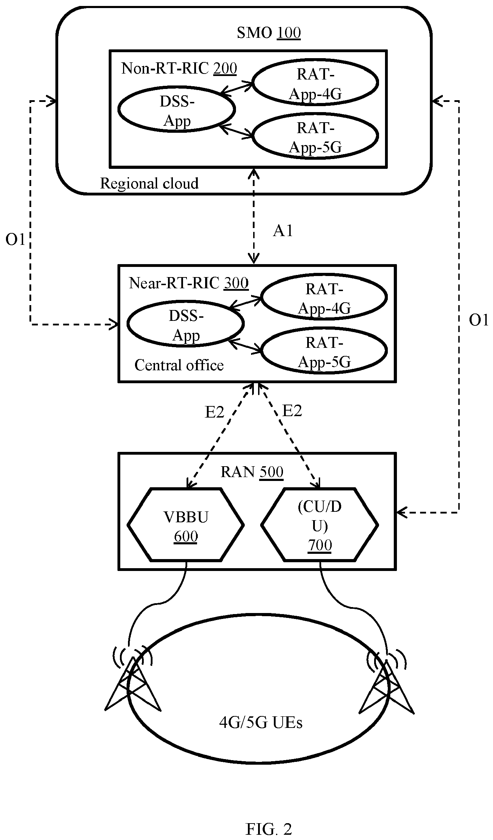

Dynamic spectrum sharing (DSS) may be implemented at both the Non-RT-RIC (200) and the Near-RT-RIC (300), as shown in FIG. 2. The DSS, herein, is considered is an example, as such other spectrum sharing mechanism(s) may be implemented in accordance with the present invention.

The radio interface protocol between the UE (800-1/800-2) and the RAN (500) may be divided into a physical layer, a data link layer, and a network layer, and may be further divided into a control plane (C-plane) which is a protocol stack for control signal transmission and a user plane (U-plane) which is a protocol stack for data information transmission. The layers of the radio interface protocol exist in pairs at the UE (800-1/800-2) and the RAN (500), and are in charge of data transmission of the interface (as detailed below).

A physical (PHY) layer belongs to layer-1 (L1). The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources.

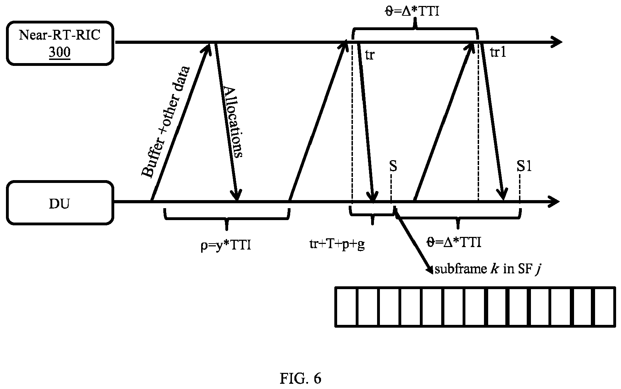

The PHY layer uses several physical control channels. A physical downlink control channel (PDCCH) reports to the UE (800-1/800-2) about the resource allocation of a paging channel (PCH) and a downlink shared channel (DL-SCH), and hybrid automatic repeat request (HARQ) information related to the DL-SCH. The PDCCH may carry a UL grant for reporting to the UE (800-1/800-2) about resource allocation of UL transmission. A physical control format indicator channel (PCFICH) reports the number of OFDM symbols used for PDCCHs to the UE (800-1/800-2), and is transmitted in every subframe (as detailed in FIG. 6).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms interval and had numbers between 0 and 9 called as subframe number and consequently for 10ms interval had numbers between 0 and 1023 called as system frame number (SFN). As a standard definition, the physical resource block (PRB) may be a smallest unit of frequency or bandwidth that can be allocated to a user. The physical resource block (or resource block) may typically 180 kHz wide in frequency and 1 slot long in time. In frequency, resource blocks may be either 12 x 15 kHz subcarriers or 24 x 7.5 kHz subcarriers wide. The number of subcarriers used per resource block for most channels and signals may be 12 subcarriers. Radio assignments in the telecommunication system may be achieved using allocation of physical resource blocks.

Thus, the present invention aims at the PRB assignment distribution and synchronization between the RIC and the DU by tracking the PRBs assigned, and the PRBs that needs to be assigned based on time to ensure that no PRB is over or under allocated. Further, the present invention aims at the RIC allocated PRBs based on a latest bitmap. A bitmap may represent a resource block group allocated to a user equipment, i.e. the bitmap is a combination of bits allocated to a resource block group for a specific subframe number. The bitmap may actually show allocation of bandwidth for a resource block group containing multiple resource blocks. Example of bit map may be 00111111110000, which shows that allocation of resource blocks has started from resource block 3, as the 3rd bit in the example bitmap is 1 and allocation gets completed at resource block 10, as 10th bit is also 1, followed by 0 bits.

Consider a 100*100 matrix, on which each rows are represented as resource blocks, starting from resource block 1 to resource block 100, and columns are represented as subframe numbers. The subframe number may start from 0 and end with 9th column for each system frame number (SFN), which shows 10 SFN in the 100*100 matrix, each SFN containing 10 subframe numbers. Let's say that the example bitmap 00111111110000 may start from subframe number 0 for system frame number (SFN) 10, then the bitmap may be read as: allocation from resource block 3 to resource block 9 in subframe number 0 for system frame number 10 can be used for a cell.

Further, a resource block may comprise of a plurality of resource elements (RE), each resource element being placed in individual subframe for a specific resource block (PRB). Also, all REs in each PRB pair which may be used for the reference and control signals should be protected from data transmission. These protected bits may be shown in the bitmap of REs in each PRB pair and may be known as protected bits. The protected bits may not be used during resource allocation, as it cannot be used for data communication. The available bandwidth for allocation may be calculated by reducing the total bandwidth as per the bitmap information, by the protected bits, and then the resource blocks may be allocated. The protected RE may follow repeated pattern in the resource block. In the bitmap of REs occupied by the protected signal within one PRB, each position in the bitmap may represent an RE in one PRB; value "0" may indicate "resource not protected", value "1" may indicate "resource protected ".

The allocation of the resources, according to the wireless communication system (1000) is detailed below.

The Non-RT-RIC (200) and the Near-RT-RIC (300) may host xApps, for example, DSS-App that is configured to provide the spectrum proportion (X and Y, in FIG. 1) to be shared between the type one network scheduler (600) and the type two network scheduler (700) using RAT-App-5G and RAT-App-4G, respectively. The xApps (at the Near-RT-RIC (300)) uses an "E2" interface to collect near real-time RAN (500) information and to provide value added services using these primitives, guided by the policies/configuration and the enrichment data provided by the "A1" interface from the xApps at the Non-RT-RIC (200)). An "O1" interface collects data for training in the Non-RT RIC (200) (integrated with SMO (100)).

Unlike conventional DSS, where the RAN implements a local computational process for allocating the radio resources for each network scheduler supporting different RAT, respectively. The present invention implements a centralized process for allocating the radio resources using the wireless communication system (1000).

One such advantage of using the DSS and further allocating the radio resource assignments in the wireless communication system (1000) is that allocation of the radio resource assignments can be processed using the intellectualization of the Non-RT-RIC (200) and the Near-RT-RIC (300), that can dynamically generate a new/updated radio resource assignments (unlike conventional/existing vendor proprietary limitation) for the type one network scheduler (600) and the type two network scheduler (700).

FIG. 3 illustrates various hardware elements in the Non-RT-RIC (the second controller) (200). The Non-RT-RIC (200) may include a resource configuration unit (210) and a communication unit (220). The resource configuration unit (210) may include a DSS configuration unit (204).

The DSS configuration unit (204) may be used to configure (or split) the radio resource assignments/spectrum/PRB assignments based on the requirements. The requirements may be provided by the vendor/MNOs or may dynamically configured based on the current and future demand of the network schedulers (type one/type two) (600/700) and the UEs (800-1/800-2). The DSS configuration unit (204) may implement the resource configuration using the DSS-App hosted by the Non-RT-RIC (200) (as shown in FIG. 2).

The first radio resource allocation configuration (DSS policy) is transmitted to the Near-RT-RIC (300) using the communication unit (220) (may also be referred to as "communicator). The communication unit (220) may include a transmitter (not shown) and a receiver (not shown), an interface component(s) supporting plurality of interfaces (such as "A1", "O1", and any other supporting interface, represented as dotted lines in the FIG. 1). The communication unit (220) may be implemented, for example, in form of software layers that may be executed on a cloud computing platform/system. The communication unit (220) may be configured to communicate with the SMO (100) to avail the SMO services and further with the Near-RT-RIC (300) to transmit the DSS configuration policy.

In another aspect, the communication unit (220) is configured to communicate [with] "or" receive the data collection and provisioning services of the RAN (500) from the SMO (100). The data collection, as described above, may include data (or key performance indicators (KPIs) related to the bandwidth of network schedulers (the type one network scheduler (600) and the type two network scheduler (700)) and the user equipments (UEs) (800-1 and 800-2) connected to the type one network scheduler (600) and the type two network scheduler (700), respectively of the RAN (500).

The DSS configuration unit (204) can be configured to generate a second radio resource allocation configuration. The second radio resource allocation configuration including an updated DSS configuration is then transmitted, by the communication unit (220) to the Near-RT-RIC (300).

FIG. 4 illustrates various hardware elements in the Near-RT-RIC (the first controller) (300). The Near-RT-RIC (300) may include a resource allocation unit (310), an encoder unit (320) and a communication unit (330). The resource allocation unit (310) may include an AI/ML unit (302) and a DSS allocation unit (304).

The communication unit (330) may be configured to receive, from the type one network scheduler (600) and the type two network scheduler (700), a first PRB assignment configuration. The PRB assignment configuration may be part of periodic reports, which may be received from the network scheduler by the plurality of controllers in the RAN. These periodic reports may be received on regular intervals by the plurality of controllers and include multiple parameters defining traffic related parameters. The traffic related parameters may signify requests from a plurality of UEs connected with the network schedulers for allocation of physical resource blocks (PRBs). The plurality of UEs may periodically send requests for PRBs to the network scheduler which may process the requests and transmits the processed requests and parameters to the controllers. A buffer report which may signify traffic reports from the network scheduler includes the PRB assignment configuration. The PRB assignment configuration may signify traffic size, bitmap information on the resource blocks, requested bitmap from the UEs based on resource requirement at specific time frames (system frame numbers and subframe numbers at UE end), proposed PRB based on protected bitmap information, current system frame number which may denote position of current resource blocks and elements being used by the UEs through network scheduler. It may further include a current timestamp which denotes starting time of the current system frame number. The first physical resource block (PRB) assignment configuration may be received through buffer report messages from the type one network scheduler (600) and the type two network scheduler (700). In one example, the first PRB assignment configuration may include at least one of a buffer size, a request bitmap indicating proposed PRB assignment, a protected bitmap, a current system frame number (SFN) (i), a timestamp (t) indicating start of the current SFN. The bitmap may be used to allocate the radio resources and each bit in the bitmap indicates a resource block (RB). The protected bitmap may be only included whenever configuration (e.g., MIMO or Physical Downlink Control Channel (PDCCH) configuration) changes.

The resource allocation unit (310), communicatively coupled to the communication unit (330), may be configured to determine a second PRB assignment configuration using the first PRB assignment configuration. The second PRB assignment configuration may be the next set of PRB configuration which may be required by the respective network scheduler for allocation of PRBs to the UEs connected with it. The second PRB assignment configuration may also include the parameters similar to the first PRB assignment configuration. These parameters may be determined by the plurality of controllers using the first PRB assignment configuration using a synchronization time. The synchronization time may be explained as a waiting time which may be required by the controller for transmitting the second PRB assignment configuration, because the reception of periodic reports from the network scheduler by the controllers and transmission of the second PRB assignment configuration may require a waiting time so that the resources are not over or under allocated. The synchronization time may take count of the transport delay between the network scheduler and controller; a maximum processing time at the type network scheduler a guard time for allocation of PRBs. The second PRB assignment configuration may further comprise at least one of: a start system frame number, a start subframe number for PRB assignment at a time (T), the time (T) is greater than or equal to a synchronization time (s). That is, the resource allocation unit (310) may be configured to track the current PRBs that are assigned using the received request bitmap indicating proposed PRB assignment, and further determine (using the intellectualization) the updated PRBs (second PRB assignment configuration) that needs to be assigned. The second PRB assignment configuration may further comprise at least one of: a start system frame number, a start subframe number for PRB assignment at a time (T), the time (T) is greater than or equal to a synchronization time (s). The synchronization time is a waiting time at the first controller (300) for transmitting the second PRB assignment configuration to the type one network scheduler (600) and the type two network scheduler (700). Once the second bitmap assignment configuration is determined, the allocation of this configuration to the type one network scheduler (600) and the type two network scheduler (700) takes place, which is based on the synchronization time(s) to ensure that no PRB is over or under allocated and further to avoid any conflict between the between the PRB assignments for the type one network scheduler (600) and the type two network scheduler (700). In one example, each request bitmap from the first PRB assignment configuration is valid from the arrival time at the resource allocation unit (310) till next request bitmap. The resource allocation unit (310) may be configured to always utilize the latest request bitmap when it allocates the second bitmap assignment configuration. In other words, the first PRB assignment configuration is used by the first controller (300) until another PRB assignment configuration is received by the first controller.

In one example, the second PRB assignment configuration is determined, based on SFN (j) and subframe number (k) using the current SFN (i) and the timestamp (t) at the synchronization time (s), by using equation (1), as shown below:

$$\text{SFN (j)} = (i + \text{floor} ((s - t)/ \text{Nsub})) \bmod \text{Nsys and } k = (s-t) \bmod \text{Nsub} \ldots (1),$$

where Nsub is the number of subframes per system frame and Nsys-1 is the maximum system frame number.

For example, given that, the SFN (j) and subframe number (k) at any time t2 (in ms) is given by equation (2):

$$j= (i + \text{floor} ((t2 - t1)/10)) \bmod 1024 \text{ and } k = (t2 - t1) \bmod 10 \ldots \ldots (2),$$

where SFN (i) is the current subframe of the first PRB assignment configuration and its start timestamp t1 (in ms).

Further, the second PRB assignment configuration is determined based on the start system frame number and subframe number for transmitting the second PRB assignment configuration using the current SFN (i) and the timestamp (t) at the synchronization time (s) of the first PRB assignment configuration. The start subframe number indicates that allocation of the second PRB assignment configuration starts at a first subframe after the synchronization time.

Once, the second PRB assignment configuration is determined, the resource allocation unit (310) may be configured to transmit the second PRB assignment configuration to the type one network scheduler (600) and the type two network scheduler (700) using the determined system frame number (SFN) and the subframe number and allocate (using the DSS allocation unit (304)) the second PRB assignment configuration at the synchronization time (s) to the type one network scheduler (600) and the type two network scheduler (700). In one example, the resource allocation unit (310) may be configured to set a next subframe of system frame number (j) and subframe (k) as the start subframe for the second PRB allocation configuration (updated PRB allocation) for the type one network scheduler (600) and/or the type two network scheduler (700) at every $\theta = \Delta*\text{TTI}$ interval. The allocation bitmap, herein, indicates the first controller (Near-RT RIC) (300) PRB assignment decision to the scheduler "1" indicates the PRB is assigned, as indicated in FIG.6 (normally $\Delta \geq y$). In one example, each allocation bitmap (i.e., second PRB assignment) is valid from the specified start system frame number (and subframe number) till the start system frame number (and subframe number) of next allocation bitmap. Therefore, the valid duration of the allocation bitmap is $\Delta$TTIs.

Thus, by virtue of the allocated second PRB assignment configuration, the synchronization between the type one network scheduler (600) and the type two network scheduler (700) with respect to PRB assignment can be enhanced. That is, ensuring effective and accurate distribution of the PRB assignment to both the type one network scheduler (600) and the type two network scheduler (700).

In an example implementation of synchronization between respective schedulers i.e., the type one network scheduler (600) and the type two network scheduler (700) on new resource assignment is detailed below.

Given that the resource allocation unit (310) transmits the second PRB assignment configuration at time (tr), it may be assumed that at synchronization time s = tr + T + p + g, where "T" is the maximum or 99 percentile transport delay between the resource allocation unit (310) and one of the type one network scheduler (600) and the type two network scheduler (700), "p" is maximum processing time at each of the type one network scheduler (600) and the type two network scheduler (700) and "g" is guard time, all the schedulers should be ready to enforce the allocation, as shown in FIG. 6.

The SFN (j) and subframe (k) at time "s" may be determined by equation (1 or 2). For example, if the start SFN for the allocation bitmap is set to "j+1", all schedulers are synchronized in time for the start of the new resource allocation and will not interfere with each other. For allocation at finer granularity, the second PRB assignment configuration comprises the "start subframe number", so that the new allocation may take effect after the first subframe after time "s", i.e., system frame "j" and subframe "k+ 1", or system frame (J+1) mode 1024 and subframe 0 if k = 9.

In consideration of highly reliable link, it is a rare event that allocation bitmap is lost or experiences larger delay. But in case of such larger delay or loss of the allocation bitmap, the type one network scheduler (600) and/or the type two network scheduler (700) (i.e., E2 node) can either switch off or utilize the previous allocation bitmap (i.e., first PRB assignment configuration), which may lead to inefficiency or collision, respectively. Thus, in order to increase the reliability, the E2 node may send request to the first controller (Near-RT-RIC) (300) for re-transmission of the allocation(s) (i.e., updated PRB assignment configuration) if it does not receive the allocation after time "s". Hence, the present invention provides a very high probability that E2 node receives the allocation after re-transmission(s) and switch to the new allocation. Since the round trip time (RTT) is very small compared with $\Delta$TTIs, the silent or conflict period should be a very small percentage of the $\Delta$TTI interval.

In another example scenario of synchronization between network schedulers on updated/new resource assignment for demand prediction-based bandwidth allocation is detailed below:

The type one network scheduler (600) and/or the type two network scheduler (700) receive new bitmap assignment RTT ms in response to transmission of the report (assignment report comprising the first PRB assignment configuration) to the RIC, where RTT = round trip delay + processing time at both RIC and scheduler. The PRB assignment to the scheduler is received for the next $\Delta$TTI interval, starting $\Delta$TTIs after the scheduler sends the report or starting time of previous assignment.

In one example implementation, $\Delta$TTI is typically a few subframes in length, which is much larger than the RTT, which in turn is typically less than one subframe. As such, it can be assumed that all the schedulers will receive the new bitmap assignment and be ready to switch to the new assignment well before the new assignment takes effect.

For example, given the start system frame number "kn" and subframe number "jn" for the previous bitmap assignment, the first controller (Near-RT RIC) (300) sets the start system frame number "kn+1" and subframe number "jn" for the new bitmap assignment to be as described in equation (3).

$$kn+1 = (kn + floor(\Delta/Nsub)) \bmod Nsys \text{ and } jn+1 = (jn + \Delta) \bmod Nsub \dots (3)$$

The AI/ML unit (302) may be configured to implement machine learning/artificial intelligence technologies to generate and deploy machine learning models/prediction models to control the real time behaviour of the RAN (500). For example, in some aspects, the periodic reports may be transmitted to the AI/ML unit (302) as an input and an output may be transmitted to the encoder unit (320). The AI/ML unit (302) may be configured to provide a traffic prediction models to enhance the spectrum allocation and/or to effectively manage the interoperability interference.

FIG. 5 illustrates a signal sequence diagram (S500) implementing radio resources allocation synchronization in the wireless communication system (1000). At step 1, the second controller (Non-RT-RIC) (200) may transmit, over the "A1" interface, the DSS policy (resource allocation)/the first radio resource allocation configuration to the first controller (Near-RT-RIC) (300).

At steps 2 and 3, the first controller (Near-RT-RIC) (300) may transmit, over the "E2" interface, the control/configuration (report interval, moving average parameters, etc.) to the type one network scheduler (600) and the type two network scheduler (700).

At steps 4 and 5, the first controller (Near-RT-RIC) (300) may transmit, over the "E2" interface, subscription to metrics (buffer demand, arrival rate, etc.,) to the type one network scheduler (600) and the type two network scheduler (700).

At steps 6 and 7, the first controller (Near-RT-RIC (300)) may receive, over the "E2" interface, the first PRB assignment configuration as buffer demand report or buffer report messages from the type one network scheduler (600) and the type two network scheduler (700).

At step 8, the first controller (Near-RT-RIC) (300) may be configured to generate the traffic prediction models (using the AI/ML unit (302)). Further, at step 9, the first controller (Near-RT-RIC) (300) may be configured to encode, using the encoder (320), the PRB assignment using a bit vector. The PRB assignment (at step 9) is explained in conjunction with FIGs 4 and 6.

At steps 10 and 11, the first controller (Near-RT-RIC) (300) may be configured to transmit/distribute, over the "E2" interface, the second PRB assignment configuration (i.e., bitmap vector) for each of the type one network scheduler (600) and the type two network scheduler (700).

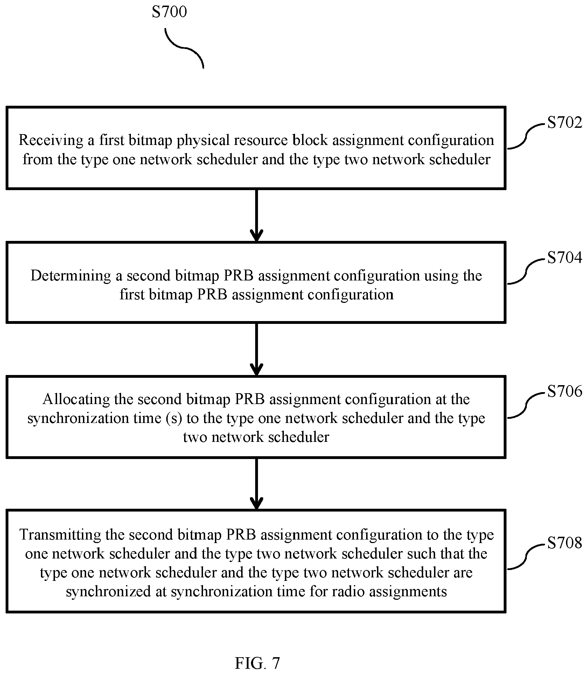

FIG. 7 is a flow chart (S700) illustrating a method for providing dynamic synchronization of radio resources in the wireless communication system (1000). The wireless communication system (1000) is the O-RAN system. The operations (S702-S708) are performed by the first controller (Near-RT-RIC) (300).

At S702, the method includes receiving the first physical resource block (PRB) assignment configuration from the type one network scheduler (600) and the type two network scheduler (700), wherein the first physical resource block (PRB) assignment configuration is received by the first controller (300). The first physical resource block (PRB) assignment configuration comprises at least one of the buffer size, the request bitmap indicating proposed PRB assignment, the protected bitmap, the current system frame number (SFN) (i), a current subframe number, the timestamp (t) indicating start of the current SFN.

At S704, the method includes determining the second PRB assignment configuration using the first PRB assignment configuration, wherein the second PRB assignment configuration is determined by the first controller (300).

The second PRB assignment configuration may further comprise at least one of: a start system frame number, a start subframe number for PRB assignment at a time (T), the time (T) is greater than or equal to a synchronization time (s).. The synchronization time is a waiting time at the first controller for transmitting the second PRB assignment configuration to the type one network scheduler and the type two network scheduler.

At S706, the method includes allocating the second PRB assignment configuration at the synchronization time (s) to the type one network scheduler (600) and the type two network scheduler (700) by the first controller (300).

At S708, the method includes transmitting the second PRB assignment configuration to the type one network scheduler (600) and the type two network scheduler (700), wherein the type one network scheduler and the type two network scheduler are synchronized at the synchronization time for radio assignments.

The various actions, acts, blocks, steps, or the like in the flow chart (S700) may be performed in the order presented, in a different order or simultaneously. Further, in some embodiments, some of the actions, acts, blocks, steps, or the like may be omitted, added, modified, skipped, or the like without departing from the scope of the invention.

In one aspect of the invention, the radio resource assignments need to be synchronized by the controller while distributing to the network schedulers. The synchronization is required as delays occur in the actual arrival of periodic reports at the controller from the network scheduler and also during the allocation of resource blocks, due to transport delays, processing time and guard time. The synchronization at the network schedulers is achieved by computing a synchronization time, computing a start subframe for allocating the resource blocks and further allocating the resource blocks after the synchronization time to the network scheduler by the controller. This ensures that the allocation is precise and there is no under or overlapping resource allocation to the network schedulers.

The embodiments disclosed herein can be implemented using at least one software program running on at least one hardware device and performing network management functions to control the elements.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM).

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

While the above detailed description has shown, described, and pointed out novel features as applied to various embodiments, it can be understood that various omissions, substitutions, and changes in the form and details of the devices or algorithms illustrated can be made without departing from the scope of the disclosure. As can be recognized, certain embodiments described herein can be embodied within a form that does not provide all of the features and benefits set forth herein, as some features can be used or practiced separately from others.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. A method for providing dynamic synchronization of radio resources in a radio access network (RAN) (500) in a wireless communication system (1000), wherein the RAN (500) has a type one network scheduler (600) and a type two network scheduler (700), the method comprising:

    receiving a first physical resource block (PRB) assignment configuration from the type one network scheduler (600) and the type two network scheduler (700), wherein the first physical resource block (PRB) assignment configuration is received by a first controller (300), the first physical resource block (PRB) assignment configuration comprises at least one of a buffer size, a request bitmap indicating proposed PRB assignment, a protected bitmap, a current system frame number (SFN) (i), a timestamp (t) indicating start of the current SFN;
    determining a second PRB assignment configuration using the first PRB assignment configuration, wherein the second PRB assignment configuration is determined by the first controller (300), the second PRB assignment configuration comprises at least one of:, a start system frame number, a start subframe number for PRB assignment at a time (T), the time (T) is greater than or equal to a synchronization time (s), the synchronization time is a waiting time at the first controller for transmitting the second PRB assignment configuration to the type one network scheduler and the type two network scheduler; and
    allocating the second PRB assignment configuration at the time (T), the time (T) is greater than or equal to the synchronization time (s), to the type one network scheduler (600) and the type two network scheduler (700), by the first controller (300),
    wherein the type one network scheduler and the type two network scheduler are synchronized at the synchronization time for radio assignments,
    wherein the first PRB assignment configuration is used by the first controller (300) until another PRB assignment configuration is received by the first controller.

2. The method as claimed in claim 1, wherein determining the second PRB assignment configuration using the first PRB assignment configuration further comprises:

determining a system frame number (SFN) (j) and a subframe number (k) using the current SFN (i) and the timestamp (t) from the first PRB assignment configuration at the time (t), the time (t) is greater than or equal to the synchronization time (s), wherein the SFN (j) = (i + floor((s - t)/Nsub)) mod Nsys and k = (s-t) mod Nsub, where Nsub is the number of subframes per system frame and Nsys-1 is the maximum system frame number; and transmitting the second PRB assignment configuration with the PRB assignment to the type one network scheduler (600) and the type two network scheduler (700) using the determined system frame number (SFN) and the subframe number.

3. The method as claimed in claim 1, wherein determining the second PRB assignment configuration using the first PRB assignment configuration further comprises:
determining a start system frame number and a start subframe number for the PRB assignment to the type one network scheduler (600) and type two network scheduler (700) using the current SFN (i) and the timestamp (t) at the synchronization time (s) of the first PRB assignment configuration.

4. The method as claimed in any preceding claim further comprising:
determining the synchronization time based on a sum of transmit time (tr) of the second PRB assignment configuration, a maximum transport delay (T) between a resource allocation unit (310) and one of the type one network scheduler (600) and the type two network scheduler (700), a maximum processing time (p) at each of the type one network scheduler and the type two network scheduler and guard time (g).

5. The method as claimed in any preceding claim, wherein receiving the first physical resource block (PRB) assignment configuration further comprising receiving the first PRB assignment configuration by the first controller (300) through buffer report messages, from the type one network scheduler (600) and the type two network scheduler (700).

6. A wireless communication system (1000) for providing dynamic synchronization of radio resources, the wireless communication system (1000) comprising a radio access network (RAN) (500) and a first controller (300), wherein the RAN (500) has a type one network scheduler (600) and a type two network scheduler (700), the first controller (300) configured to:

receive a first physical resource block (PRB) assignment configuration from the type one network scheduler (600) and the type two network scheduler (700), the first physical resource block (PRB) assignment configuration comprises at least one of a buffer size, a request bitmap indicating proposed PRB assignment, a protected bitmap, a current system frame number (SFN) (i), a timestamp (t) indicating start of the current SFN;
determine a second PRB assignment configuration using the first PRB assignment configuration, the second PRB assignment configuration comprises at least one of: a start system frame number, a start subframe number for allocating PRB assignment at a time (T), a time (T) is greater than or equal to a synchronization time (s), the synchronization time is a waiting time at the first controller for transmitting the second PRB assignment configuration to the type one network scheduler and the type two network scheduler; and
allocate the second PRB assignment configuration at the time (T), the time (T) is greater than or equal to the synchronization time (s), to the type one network scheduler (600) and the type two network scheduler (700), wherein the type one network scheduler and the type two network scheduler are synchronized at the synchronization time for radio assignments,
wherein the first PRB assignment configuration is used by the first controller (300) until another PRB assignment configuration is received by the first controller.

7. The wireless communication system (1000) as claimed in claim 6, wherein the first controller (300) configured to determine the second PRB assignment configuration using the first PRB assignment configuration further comprises:

determining a system frame number (SFN) (j) and a subframe number (k) using the current SFN (i) and the timestamp (t) from the first PRB assignment configuration at the time (t), the time (t) is greater than or equal to the synchronization time (s), wherein the SFN (j) = (i + floor((s - t)/ Nsub)) mod Nsys and k = (s-t) mod Nsub, where Nsub is the number of subframes per system frame and Nsys-1 is the maximum system frame number; and transmitting the second PRB assignment configuration to the type one network scheduler (600) and the type two network scheduler (700) with the PRB assignment using the determined system frame number (SFN) and the subframe number.

8. The wireless communication system (1000) as claimed in claim 6, wherein the first controller (300) configured to determine the second PRB assignment configuration using the first PRB assignment configuration further comprises:

determining a start system frame number and a start subframe number and subframe number for transmitting the PRB assignment using the current SFN (i) and the timestamp (t) at the synchronization time (s) of the first PRB assignment configuration.

9. The wireless communication system (1000) as claimed in any one of claims 6 to 8, wherein the synchronization time is determined based on a sum of transmit time (tr) of the second PRB assignment configuration, a maximum transport delay (T) between a resource allocation unit (310) and one of the type one network scheduler (600) and the type two network scheduler (700), a maximum processing time (p) at each of the type one network scheduler and the type two network scheduler and guard time (g).

10. The wireless communication system (1000) as claimed in any one of claims 6 to 9, wherein the first PRB assignment configuration is received by the first controller (300) through buffer report messages from the type one network scheduler (600) and the type two network scheduler (700).

FIG. 1

FIG. 2

Non-RT-RIC 200

Resource configuration unit 210

DSS configuration unit 204

Communication unit 220

FIG. 3

Near-RT-RIC 300

Resource allocation unit 310

AI/ML unit 302

DSS allocation unit 304

Encoder unit 320

Communication unit 330

FIG. 4

S500

FIG. 5

FIG. 6

S700

Receiving a first bitmap physical resource block assignment configuration from the type one network scheduler and the type two network scheduler ⟋S702

Determining a second bitmap PRB assignment configuration using the first bitmap PRB assignment configuration ⟋S704

Allocating the second bitmap PRB assignment configuration at the synchronization time (s) to the type one network scheduler and the type two network scheduler ⟋S706

Transmitting the second bitmap PRB assignment configuration to the type one network scheduler and the type two network scheduler such that the type one network scheduler and the type two network scheduler are synchronized at synchronization time for radio assignments ⟋S708

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/073335 A1 (PANCHAL JIGNESH S [US]) 13 March 2014 (2014-03-13) * figures 7, 8, 10 * * paragraph [0017] - paragraph [0018] * * paragraph [0041] * * paragraph [0058] - paragraph [0059] * * paragraph [0146] - paragraph [0148] * ----- | 1-10 | INV. H04W72/04 H04W72/12 H04W24/02 |
| A | "Multi-access Edge Computing (MEC) MEC 5G Integration", ETSI DRAFT SPECIFICATION; MEC 031, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG MEC Multi-access Edge Computing, no. V2.0.5 18 June 2019 (2019-06-18), pages 1-32, XP014347041, Retrieved from the Internet: URL:docbox.etsi.org/ISG/MEC/70-Draft/0031/ MEC-00315GIntegrationv205/GR MEC-0031v205_cm.docx [retrieved on 2019-06-18] * paragraph [6.5.2] * ----- | 1-10 | |
| A | EP 3 163 930 A1 (CHINA ACADEMY TELECOMMUNICATIONS TECHNOLOGY [CN]) 3 May 2017 (2017-05-03) * paragraph [0014] - paragraph [0018] * * figure 11 * ----- | 1-10 | TECHNICAL FIELDS SEARCHED (IPC) H04W |

The present search report has been drawn up for all claims

| Place of search | Date of completion of the search | Examiner |
|---|---|---|
| Munich | 9 June 2021 | del Sorbo, Filomena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 3881

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2021

| Patent document cited in search report | | Publication date | Patent family member(s) | | Publication date |
|---|---|---|---|---|---|
| US 2014073335 | A1 | 13-03-2014 | NONE | | |
| EP 3163930 | A1 | 03-05-2017 | CN | 104066092 A | 24-09-2014 |
| | | | EP | 3163930 A1 | 03-05-2017 |
| | | | US | 2017135106 A1 | 11-05-2017 |
| | | | WO | 2015196980 A1 | 30-12-2015 |

EPO FORM P0459

For more details about this annex : see Official Journal of the European Patent Office, No. 12/82